(19) Europäisches Patentamt

European Patent Office

Office européen des brevets

(11) **EP 4 520 537 A1**

(12) **EUROPEAN PATENT APPLICATION**

(43) Date of publication:
**12.03.2025 Bulletin 2025/11**

(21) Application number: **24199307.0**

(22) Date of filing: **09.09.2024**

(51) International Patent Classification (IPC):
***B41J 2/355*** *(2006.01)*

(52) Cooperative Patent Classification (CPC):
**B41J 2/3551; B41J 2/36**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.09.2023  JP 2023146613**

(71) Applicant: **FCL Components Limited Tokyo 140-0002 (JP)**

(72) Inventor: **SAKAKURA, Taichi Shinagawa-ku 140-0002 (JP)**

(74) Representative: **Haseltine Lake Kempner LLP Cheapside House 138 Cheapside London EC2V 6BJ (GB)**

(54) **THERMAL PRINTER AND CONTROL METHOD THEREOF**

(57)     A thermal printer for printing by using a thermal head including multiple dots has: a controller configured to divide one line of print data into multiple data portions, and transfer the multiple data portions to the thermal head in time division, thereby allowing the thermal head to print the one line of print data. The controller is further configured to determine the number of dots to be energized in each data portion based on a predetermined mathematical formula in which x is a number of dots to be energized for the one line of print data and n is a number by which the one line of print data is divided into the data portions, such that the number of dots to be energized is averaged out among the multiple data portions, thereby generating data inclusive of the determined number as print control data responsive to the print data.

FIG.4

EP 4 520 537 A1

**Description**

TECHNICAL FIELD

A certain aspect of the embodiments is related to a thermal printer and its control method.

BACKGROUND

The following patent document 1 discloses a technique, in which, when a printing device having a thermal head structured such that multiple heating elements are divided into multiple groups prints one line of data by using the thermal head, the thermal head is energized in time division, according to the number of dots to be heated at the same time.

RELATED ART

[Patent Document 1] Unexamined Japanese Patent Application No. 2008-30253
However, with the technique of patent document 1, the number of dots to be energized varies per divided portion of data. The fewer the number of dots to be energized, the less likely the voltage applied to the heating elements of the thermal head will drop. The fact that the amount of drop in the head power supply voltage varies per divided portion of data results in a risk that the color density will vary within one line of data printed on a printing medium, such as thermal paper.

SUMMARY

According to one embodiment of the present disclosure, a thermal printer for printing by using a thermal head including multiple dots has: a controller configured to divide one line of print data into multiple data portions, and transfer the multiple data portions to the thermal head in time division, thereby allowing the thermal head to print the one line of print data. In this thermal printer, the controller is further configured to determine the number of dots to be energized in each data portion based on a predetermined mathematical formula in which x is a number of dots to be energized for the one line of print data and n is a number by which the one line of print data is divided into the data portions, such that the number of dots to be energized is averaged out among the multiple data portions, thereby generating data inclusive of the determined number as print control data responsive to the print data.
The thermal printer according to one embodiment of the present disclosure can therefore prevent or substantially prevent color density from varying from block to block within one line of data printed on a printing medium, such as thermal paper.

BRIEF DESCRIPTION OF THE DRAWINGS

FIG. 1 is a diagram showing a structure of a thermal printer according to an embodiment of the present disclosure;
FIG. 2 is a diagram showing a structure of a thermal head according to the embodiment;
FIG. 3 is a flowchart showing a first example process flow according to the embodiment;
FIG. 4 is a diagram showing a first example, in which multiple dots in the thermal head are energized, according to the embodiment;
FIG. 5 is a diagram showing a second example, in which multiple dots in the thermal head are energized, according to the embodiment;
FIG. 6 is a diagram showing a third example, in which multiple dots in the thermal head are energized, according to the embodiment;
FIG. 7 is a diagram showing a fourth example, in which multiple dots in the thermal head are energized, according to the embodiment;
FIG. 8 is a flowchart showing a second example process flow according to the embodiment;
FIG. 9 is a diagram showing an example of a table provided in the thermal printer according to the embodiment; and
FIG. 10 is a flowchart showing a third example process flow according to the embodiment.

DETAILED DESCRIPTION OF THE INVENTION

Hereinafter, a description will be given of the embodiment of the present invention with reference to the drawings.
The embodiment will be described below with reference to the accompanying drawings.

(Thermal printer)

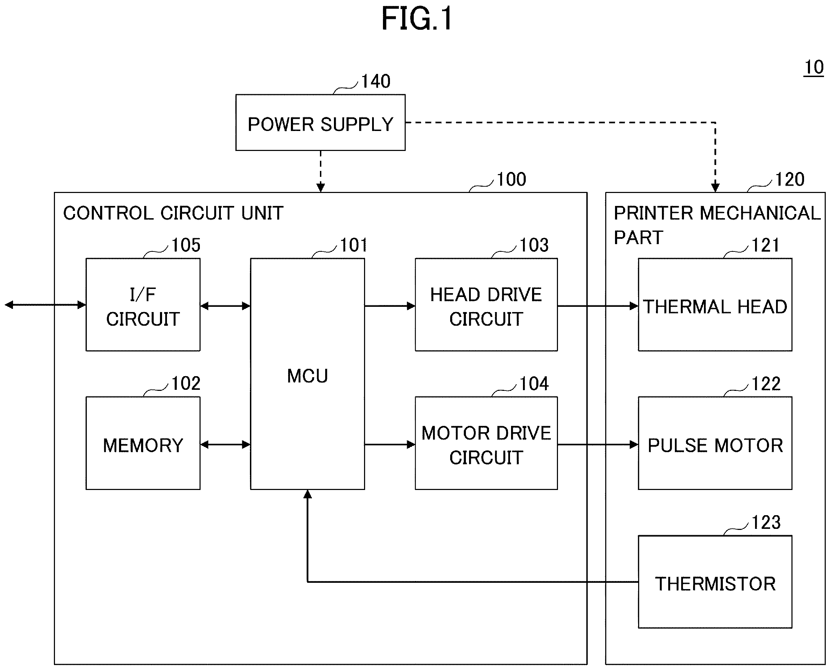

FIG. 1 is a diagram showing a structure of a thermal printer 10 according to the embodiment. The thermal printer 10 shown in FIG. 1 is a device that prints letters and characters on a printing medium, such as thermal paper by generating heat from heating elements in a thermal head 121 in accordance with print data received as an input. As shown in FIG. 1, the thermal printer 10 includes a control circuit unit 100, a printer mechanical part 120, and a power supply 140.

The control circuit unit 100 includes an MCU (Micro Controller Unit) 101, a memory 102, a head drive circuit 103, a motor drive circuit 104, and an I/F (Interface) circuit 105.

The MCU 101 is an example of a "controller." The MCU 101 performs various control steps including, for example: a step of generating print control data from print data; a process of transmitting the print control data to the thermal head 121; and a process of transmitting motor control data to the motor drive circuit 104. The MCU 101 is configured to include, for example, a CPU (Central Processing Unit) and a memory (a ROM (Read Only Memory), a flash memory, etc.) .

The memory 102 stores various data that is needed when the MCU 101 performs control steps. For the memory 102, for example, a RAM (Random Access Memory) may be used.

The head drive circuit 103 supplies the print control data output from the MCU 101 to the thermal head 121, to control the drive of the thermal head 121.

The motor drive circuit 104 controls the drive of a pulse motor 122 for feeding paper, which is the printing medium, based on motor control data output from the MCU 101.

The I/F circuit 105 controls the transmission and reception of various data between the MCU 101 and peripheral devices such as personal computers.

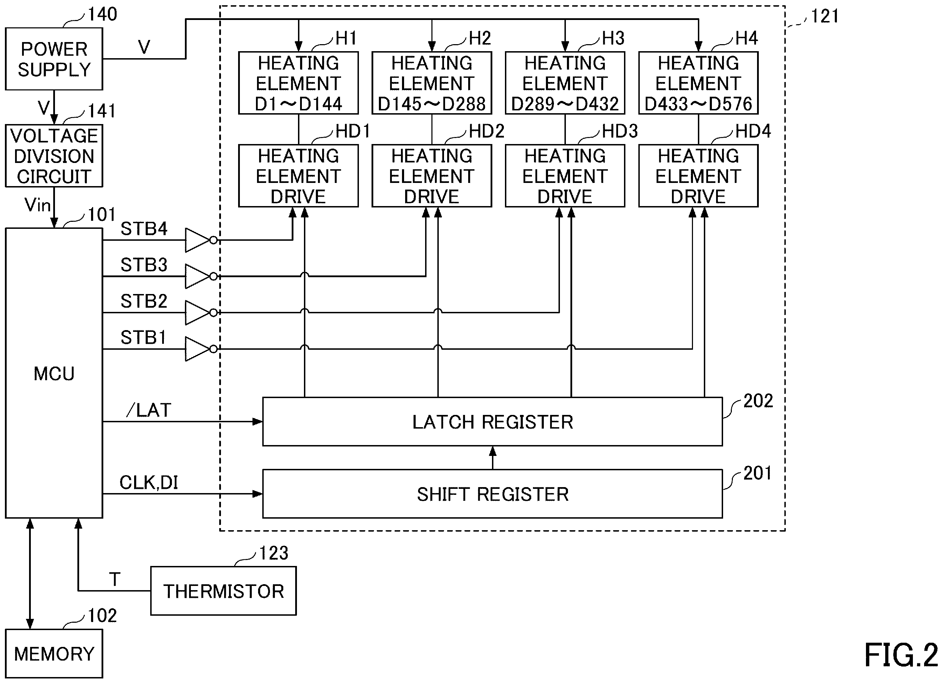

The printer mechanical part 120 includes a thermal head 121, a pulse motor 122, and a thermistor 123. The thermal head 121 has multiple heating elements (see FIG. 2) and performs printing on the printing medium by driving the heating elements in accordance with print control data received as an input from the head drive circuit 103. The pulse motor 122 feeds paper by driving the paper feed roller (not shown) of the thermal printer 10 in accordance with motor control data received as an input from the motor drive circuit 104. The thermistor 123 detects the temperature of the thermal head 121 and transmits a detection value T, representing the detected temperature, to the MCU 101.

The power supply 140 supplies power so that each component of the thermal printer 10 can operate. The power supply 140 may be, for example, a lithium ion battery, a DC stabilized power supply, and so forth.

(Structure of thermal head 121)

FIG. 2 is a diagram showing a structure of the thermal head 121 according to the embodiment. As shown in FIG. 2, the thermal head 121 includes dots D1 to D576, heating element drives HD1 to HD4, a shift register 201, and a latch register 202.

The dots D1 to D576 are positioned in a line in the main scan direction of the thermal head 121. The dots D1 to D576 produce heat when energized, that is, when electricity is run through them, heat thermal paper, and print letters and characters on it. Using the dots D1 to D576, the thermal printer 10 can print 576 dots per printing line on a printing medium.

The dots D1 to D576 are divided into groups depending on the printing area, and controlled on a per groups basis. In the present embodiment, the dots D1 to D576 are divided into four groups of 144 dots, namely a first group (D1 to D144), a second group (D145 to D288), a third group (D289 to D432), and a fourth group (D433 to D576). The first group (D1 to D144) is provided in a heating element H1. The second group (D145 to D288) is provided in a heating element H2. The third group (D289 to D432) is provided in a heating element H3. The fourth group (D433 to D576) is provided in a heating element H4. Note that the number of dots provided in the thermal printer 10, the number of heating elements, and so forth are by no means limited to the examples illustrated in the present embodiment.

The heating element drives HD1 to HD4 are provided in association with the heating elements H1 to H4 (that is, the first group to the fourth group) and connected to the heating elements H1 to H4, respectively. The heating element drives HD1 to HD4 are controlled to turn on and off by strobe signals STB1 to STB4, which are received as inputs from the MCU 101. The heating elements HD1 to HD4 are turned on and energize the associated dots when a signal to represent "1" is received as an input from the latch register 202 and a strobe signal to represent "on" is received as an input from the MCU 101. The duration of time that each dot is energized is controlled based on the time that the strobe signal is "on"; the longer the time a dot is energized, the greater the energy applied to the dot.

The shift register 201 stores print control data for one printing line, that is, 576 bits, corresponding to the dots D1 to D576. The print control data stored in the shift register 201 is data for controlling the heating of the dots D1 to D576. If a bit is "1," the dot associated with that bit is turned on, and, if a bit is "0," the dot associated with that bit is turned off.

The latch register 202, which is the same or substantially the same as the shift register 201, has a data memory area for storing print control data for one printing line corresponding to the dots D1 to D576. The latch register 202 latches the print control data stored in the shift register 201 at the timing a data latch signal (/LAT signal) is received from the MCU 101. The print control data for one printing line, latched by the latch register 202, is input to the heating element drives HD1 to HD4.

The MCU 101 generates print control data (DI signals) for printing letters and characters based on print data received as an input from a peripheral device.

The MCU 101 transmits the generated DI signals to the shift register 201 per printing line, through clock synchronous serial communication. Also, when the MCU 101 finishes transmitting DI signals for one printing line to the shift register 201, the MCU 101 then transmits an /LAT signal to the latch register 202. By this means, the MCU 101 allows the latch register 202 to latch the print control data for one printing line stored in the shift register 201.

In addition, the MCU 101 transmits the strobe signals for controlling the duration of each dot's energization, per heating element. For example, the MCU 101 transmits the strobe signal STB1 to the heating element drive HD1 that controls the heating element H1. The MCU 101 transmits the strobe signal STB2 to the heating element drive HD2 that controls the heating element H2. The MCU 101 transmits the strobe signal STB3 to the heating element drive HD3 that controls the heating element H3. The MCU 101 transmits the strobe signal STB4 to the heating element drive HD4 that controls the heating element H4.

The power supply 140 is connected to the heating elements H1 to H4, and applies a voltage V to the heating elements H1 to H4. The MCU 101 calculates the voltage V applied from the power supply 140 to the heating elements H1 to H4, based on a voltage Vin divided at a voltage division circuit 141. A thermistor 123 measures the temperature of the thermal head 121 and transmits the measurement value T to the MCU 101.

The MCU 101 adjusts the energy applied to the heating elements H1 to H4, based on the voltage V applied to the heating elements H1 to H4, and compensates for the shortage of energy if necessitated by change of the voltage.

Also, the MCU 101 adjusts the energy applied to the heating elements H1 to H4, based on the temperature's measurement value T at the thermal head 121, and compensates for the shortage of energy if necessitated by change of the temperature.

(Process flow: first example)

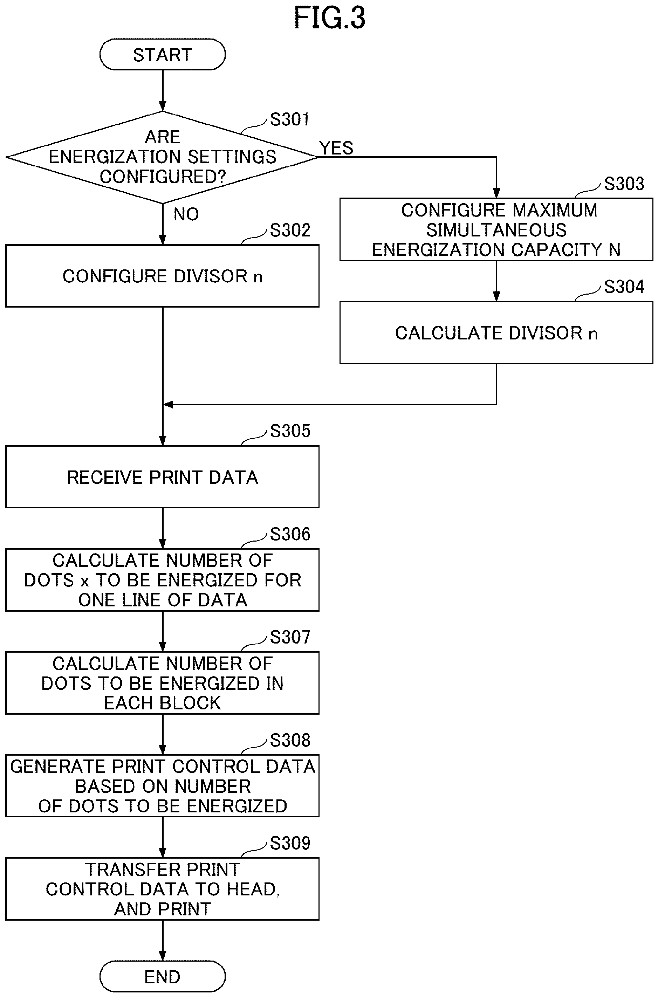

FIG. 3 is a flowchart showing a first example process flow according to the embodiment.

First, the MCU 101 determines whether or not to configure the settings for energization with the maximum number of dots ("N") that can be energized at the same time (hereinafter also referred to as "the maximum simultaneous energization capacity N") (S301) . For example, the MCU 101 may determine whether or not to configure the settings for energization based on a setting value that is stored in advance in the memory 102 or the like, or based on a setting value that the user inputs to the thermal printer 10.

In S301, when the MCU 101 determines not to configure the energization settings ("NO" in S301), the MCU 101 then configures the divisor n for the dots (the number of blocks) (S302). In this case, for example, the MCU 101 may configure a value stored in advance in the memory 102 or the like as the divisor n for the dots, or may configure a value that the user inputs to the thermal printer 10. Note that the divisor n for the dots is a software-based number, and is not limited to the physical number of heating elements and heating element drives, which have been described earlier. Note that the divisor n for the dots may be determined based on limitations such as printing speed.

In S301, when the MCU 101 determines to configure the settings for energization with a maximum simultaneous energization capacity N ("YES" in S301), the MCU 101 configures the maximum simultaneous energization capacity N (S303). In this case, for example, the MCU 101 may configure a value that is stored in advance in the memory 102 or the like, or configure a value that the user inputs to the thermal printer 10, for the maximum simultaneous energization capacity N. Note that the maximum simultaneous energization capacity N is the number of dots that can be energized at the same time, and may be determined based on, for example, the power capacity of the power supply (for example, the power supply 140) that supplies power to the thermal head 121.

Then, the MCU 101 calculates the divisor n for the dots based on the maximum simultaneous energization capacity N configured in S303 and the number of dots W in the thermal head 121 stored in advance in the memory 102 or the like, by using the following mathematical formula 1 (S304). Note that n is an integer rounded up to the nearest whole number.

$$n = W/N \quad ... \quad \text{(Mathematical formula 1)}$$

Next, the MCU 101 receives the print data transmitted from the peripheral device via the I/F circuit 105 (S305).

Next, the MCU 101 calculates the number of dots to be energized, x, for one line of data, based on the print data received in S305 (S306).

Next, using a predetermined mathematical formula, the MCU 101 calculates the number of dots to be energized in each block (the number of dots to be energized simultaneously), among multiple blocks, based on the number of dots to be energized for one line of data, calculated in S306, and the divisor n for the dots configured in S302, or the divisor n for the dots calculated in S304 (S307).

For example, the MCU 101 may calculate the number of dots to be energized in the first to the (n - 1)-th block by using the following mathematical formula 2, and calculate the number of dots to be energized in the n-th block by using the following mathematical formula 3. Note that x/n is a division that is rounded up to the nearest whole number.

$$x/n$$
$$... \text{(Mathematical formula 2)}$$

$$x - (x/n)*(n - 1)$$
$$... \text{(Mathematical formula 3)}$$

In another example, the MCU 101 may calculate the number of dots to be energized in the first to the n-th block by using the following mathematical formula 4. Here, "//" indicates a division that is rounded down to the nearest whole number.

$$(x + 0)//n, (x + 1)//n, ..., (x + (n - 1))//n$$
$$... \text{(Mathematical formula 4)}$$

Next, the MCU 101 generates print control data for energizing a number of dots in each block, as calculated in S307, among multiple blocks (S308). This print control data can at least distinguish between dots that are energized (and that therefore produce heat) and dots that are not energized (that that therefore do not produce heat) among the dots in the thermal head 121.

Next, the MCU 101 transfers the print control data generated in S308 to the thermal head 121 via the head drive circuit 103, thereby energizing a number of dots simultaneously in each block, as calculated in S307, among multiple blocks. Furthermore, the MCU 101 transfers the multiple blocks to the thermal head 121 in time division, thereby printing one line of data on a printing medium, such as thermal paper (S309). Subsequently, the MCU 101 ends the series of steps shown in FIG. 3.

Note that the MCU 101 performs the steps S306 to S309 for every one line. The MCU 101 repeats the steps S306 to S309, depending on the number of lines to be printed, thereby printing multiple lines on the printing medium.

Thus, in the thermal printer 10 according to one embodiment, the MCU 101 performs the series of steps shown in FIG. 3. By this means, when the thermal head 121 prints one line of data block by block, a number of dots to match the number of dots calculated in S307 are energized in each block among multiple blocks, so that the number of dots that are energized can be averaged out among multiple blocks. Therefore, the thermal printer 10 according to one embodiment can prevent or substantially prevent color density from varying from block to block within one line of data printed on a printing medium, such as thermal paper.

(The number of dots to be energized: first example)

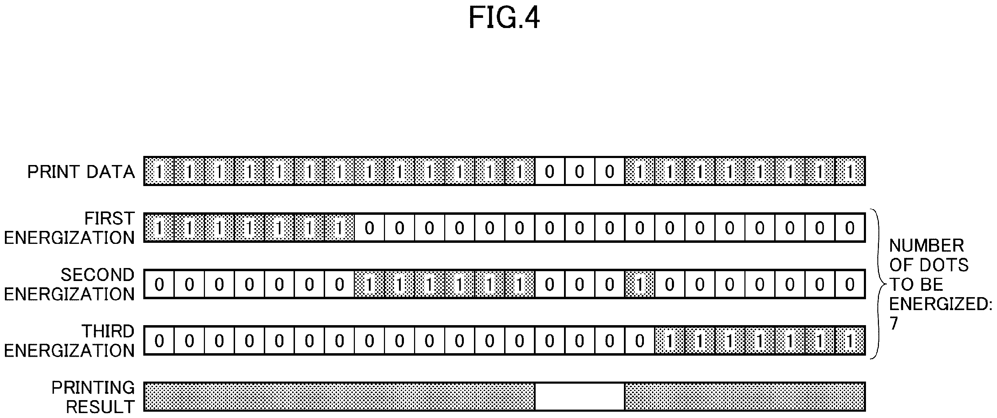

FIG. 4 is a diagram showing a first example of the number of dots to be energized in the thermal head 121 according to the embodiment.

Referring to the example shown in FIG. 4, the divisor n for the dots is calculated from the above mathematical formula 1, and the number of dots to be energized in each block among multiple blocks is calculated from the above mathematical formula 2 and mathematical formula 3. However, as shown in FIG. 4, the number of dots W in the thermal head 121 is "24," and the number of dots to be energized, "x," per one line of data is "21." Also, the maximum simultaneous energization capacity N, that is, the maximum number of dots to be energized simultaneously, is "8."

In this case, the MCU 101 calculates "3" as the divisor n for the dots from the mathematical formula 1 above. Accordingly, as shown in FIG. 4, the dots in the thermal head 121 are divided into three blocks.

Then, using the mathematical formula 2 above, the MCU 101 calculates the number of dots to be energized in the block that will be energized first among the three blocks as "7," and calculates the number of dots to be energized in the block that will be energized second as "7." Also, using the mathematical formula 3, the MCU 101 calculates the number of dots to be energized in the block that will be energized third as "7." As a result of this, the number of dots to be energized is "7" in all of the three blocks, as shown in FIG. 4, allowing the number of dots to be energized to be averaged out among the three blocks. Therefore, according to the example shown in FIG. 4, it is possible to prevent or substantially prevent color density from varying from block to block within one line of data printed on a printing medium, such as thermal paper.

Note that a conventional method, if used here, would prioritize the maximum simultaneous energization capacity N, and therefore would calculate the number of dots to be energized in the block to be energized first among the three blocks to be "8," the number of dots to be energized in the block to be energized second to be "8," and the number of dots to be energized in the block to be energized third to be "5." This would make the difference in the number of dots to be energized between the first and second blocks and the third block "3." Therefore, within one line of data printed on a printing medium, such as thermal paper, the density of color would vary from block to block.

(The number of dots to be energized: second example)

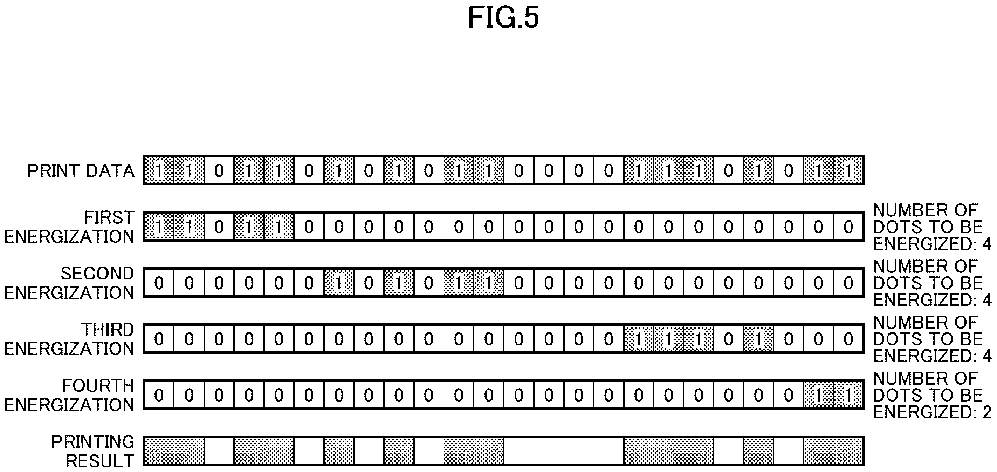

FIG. 5 is a diagram showing a second example of the number of dots to be energized in the thermal head 121 according to the embodiment.

Referring to the example shown in FIG. 5, the divisor n for the dots is calculated from the above mathematical formula 1, and the number of dots to be energized in each block among multiple blocks is calculated from the above mathematical formula 2 and mathematical formula 3. However, as shown in FIG. 5, the number of dots W in the thermal head 121 is "24," and the number of dots to be energized x per one line of data is "14." Also, the maximum simultaneous energization capacity N is "6."

In this case, the MCU 101 calculates "4" as the divisor n for the dots from the above mathematical formula 1. Accordingly, as shown in FIG. 5, the dots in the thermal head 121 are divided into four blocks.

Then, using the mathematical formula 2 above, the MCU 101 calculates the number of dots to be energized in the block to be energized first among the four blocks as "4," calculates the number of dots to be energized in the block to be energized second as "4," and calculates the number of dots to be energized in the block to be energized third as "4." Also, using the mathematical formula 3, the MCU 101 calculates the number of dots to be energized in the block to be energized fourth as "2." As a result of this, the number of dots to be energized in the four blocks is "4" or "2" as shown in FIG. 5, making the number of dots to be energized approximately equal among the four blocks. Therefore, according to the example shown in FIG. 5, it is possible to prevent or substantially prevent color density from varying from block to block within one line of data printed on a printing medium, such as thermal paper.

(The number of dots to be energized: third example)

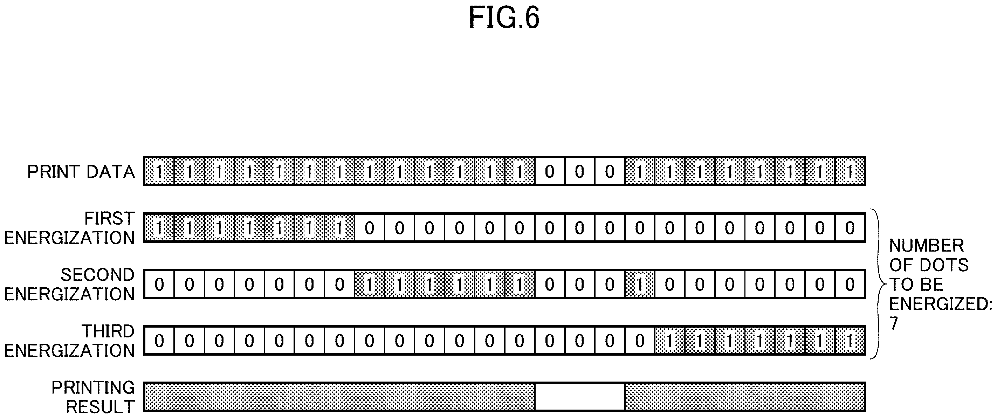

FIG. 6 is a diagram showing a third example of the number of dots to be energized in the thermal head 121 according to the embodiment.

Referring to the example shown in FIG. 6, the divisor n for the dots is calculated from the mathematical formula 1 above, and the number of dots to be energized in each block among multiple blocks is calculated from the mathematical formula 4. However, as shown in FIG. 6, the number of dots W in the thermal head 121 is "24," and the number of dots to be energized, "x," per one line of data is "21." Also, the maximum simultaneous energization capacity N is "8."

In this case, using the mathematical formula 1, the MCU 101 calculates "3" as the divisor n for the dots. Accordingly, as shown in FIG. 6, the dots in the thermal head 121 are divided into three blocks.

Then, using the mathematical formula 4, the MCU 101 calculates the number of dots to be energized in the block to be energized first among the three blocks as "7," calculates the number of dots to be energized in the block to be energized second as "7," and calculates the number of dots to be energized in the block to be energized third as "7." As a result, as shown in FIG. 6, the number of dots to be energized is "7" in all of the three blocks, thus allowing the number of dots to be energized averaged out among the three blocks. According to the example shown in FIG. 6, it is possible to prevent or substantially prevent color density from varying from block to block within one line of data printed on a printing medium, such as thermal paper.

(The number of dots to be energized: fourth example)

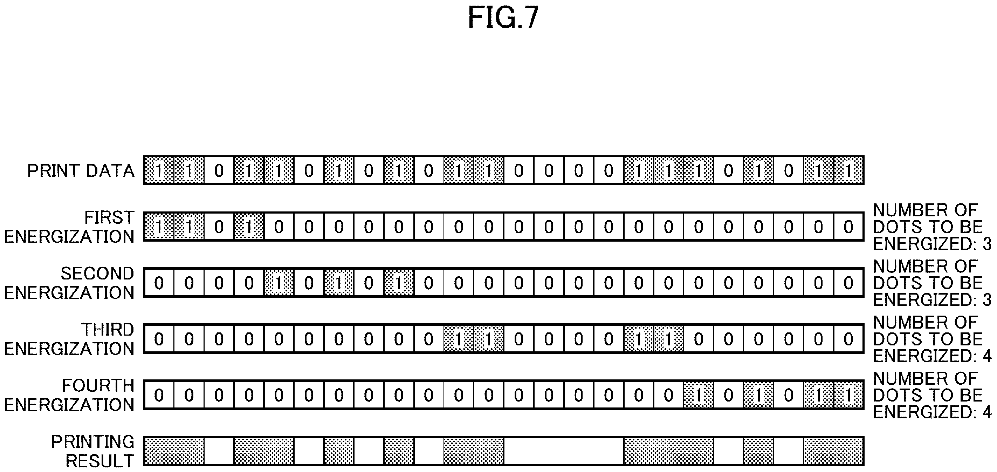

FIG. 7 is a diagram showing a fourth example of the number of dots to be energized in the thermal head 121 according to the embodiment.

Referring to the example shown in FIG. 7, the divisor n for the dots is calculated from the mathematical formula 1 above, and the number of dots to be energized in each block among multiple blocks is calculated from the mathematical formula 4. However, as shown in FIG. 7, the number of dots W in the thermal head 121 is "24," and the number of dots to be energized, "x," per one line of data is "14." Also, the maximum simultaneous energization capacity N is "6."

In this case, the MCU 101 calculates the divisor n for the dots from the above mathematical formula 1 as "4." Accordingly, as shown in FIG. 7, the dots in the thermal head 121 are divided into four blocks.

Then, using the mathematical formula 4, the MCU 101 calculates the number of dots to be energized in the block to be energized first among the four blocks as "3," calculates the number of dots to be energized in the block to be energized second as "3," calculates the number of dots to be energized in the block to be energized third as "4," and calculates the number of dots to be energized in the block to be energized fourth as "4." As a result, as shown in FIG. 7, the number of dots to be energized in the four blocks is "3" or "4," making the number of dots to be energized approximately equal among the four blocks. According to the example shown in FIG. 7, it is possible to prevent or substantially prevent color density from varying from block to block within one line of data printed on a printing medium, such as thermal paper.

In particular, according to the example shown in FIG. 7, the number of dots to be energized in each block among multiple blocks is calculated from the mathematical formula 4, so that the difference in the number of dots to be energized among multiple blocks can be made "1," and therefore the difference in the number of dots to be energized among multiple blocks can be made small compared to the example shown in FIG. 5.

(Process flow: second example)

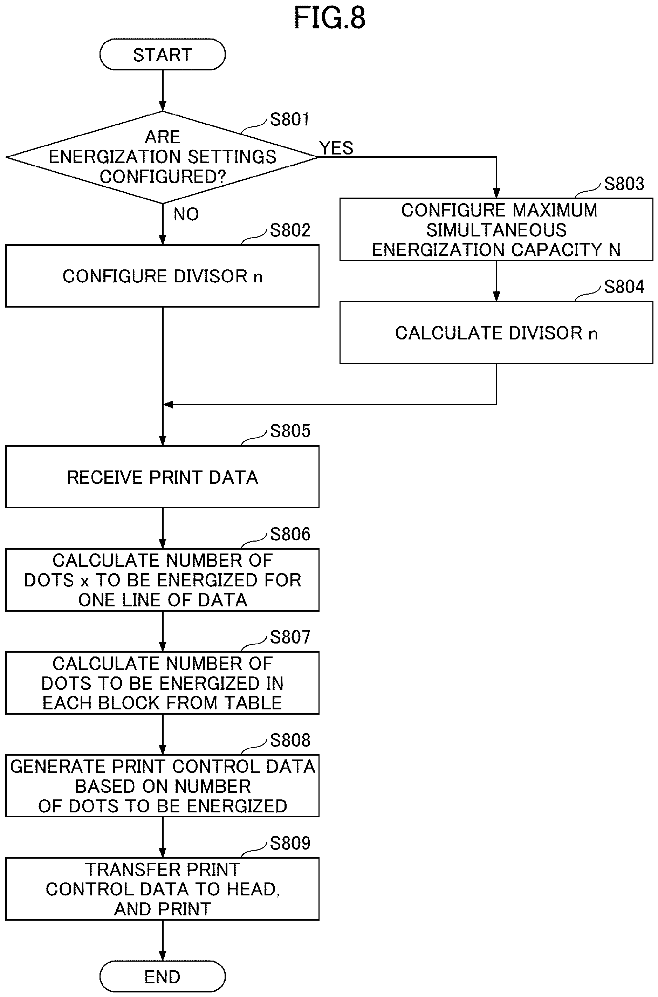

FIG. 8 is a flowchart showing a second example process flow according to the embodiment. The steps S801 to S806 and the steps S808 and S809 in the flowchart of FIG. 8 are the same or substantially the same as the steps S301 to S306 and the steps S308 and S309 in the flowchart of FIG. 3, respectively, and their detailed explanation will be omitted.

That is, the flowchart shown in FIG. 8 differs from the flowchart shown in FIG. 3 in the method of determining the number of dots to be energized in each block among multiple blocks in S807.

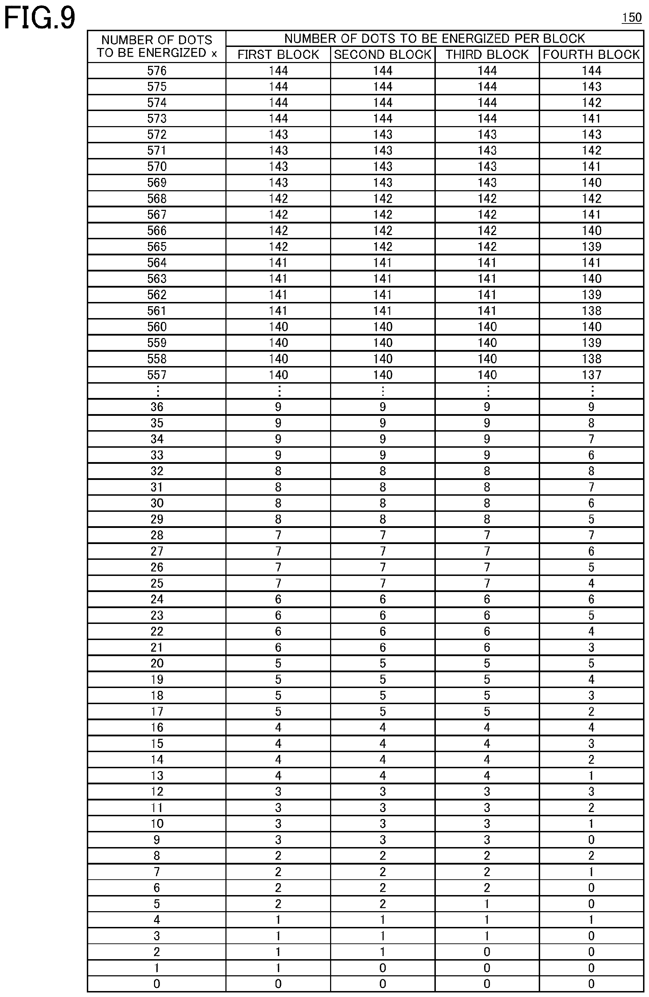

To be more specific, the MCU 101 extracts the number of dots to be energized in each block, from a data table 150 (see FIG. 9), based on the number of dots x to be energized for one line of data calculated in S806 (S807).

Here, the data table 150 is stored in the memory 102 or the like. In the data table 150, the number of dots to be energized in each block is set forth in advance, for every possible number of dots x to be energized that one line of data may contain, so that the number of dots to be energized is averaged out among multiple blocks.

In one embodiment of the thermal printer 10, the MCU 101 performs the series of steps shown in FIG. 8. When the thermal head 121 prints one line of data block by block, a number of dots to match the number extracted from the data table 150 in S807 are energized in each block among multiple blocks, thereby averaging out the number of dots to be energized among multiple blocks. Consequently, the thermal printer 10 according to one embodiment can prevent or substantially prevent color density from varying from block to block within one line of data printed on a printing medium, such as thermal paper.

FIG. 9 is a diagram showing an example of the data table 150 provided in the thermal printer 10 according to the embodiment.

As shown in FIG. 9, in the data table 150, the number of dots to be energized in each block is set forth in advance, for every possible number of dots x to be energized, such that the number of dots to be energized is averaged out among multiple blocks. Note that the method of averaging out the number of dots to be energized may use the mathematical formula 2, the mathematical formula 3, or the mathematical formula 4.

Referring to the example shown in FIG. 9, a data table 150 for use when the number of dots x to be energized ranges from "0" to "576" and the divisor n for the dots is "4" is shown. Note that, if the divisor n for the dots takes on a value other than "4," the thermal printer 10 may be provided with a data table 150 that is prepared in case the divisor n for the dots is not "4."

From the data table 150 designed as shown in FIG. 9, the MCU 101 can extract the number of dots to be energized in each block, among multiple blocks, which is the number of dots x to be energized for one line of data.

This allows the MCU 101 to determine the number of dots to be energized in each block among multiple blocks according to the number of dots x to be energized for one line of data, so that the number of dots to be energized is averaged out among the multiple blocks.

(Process flow: third example)

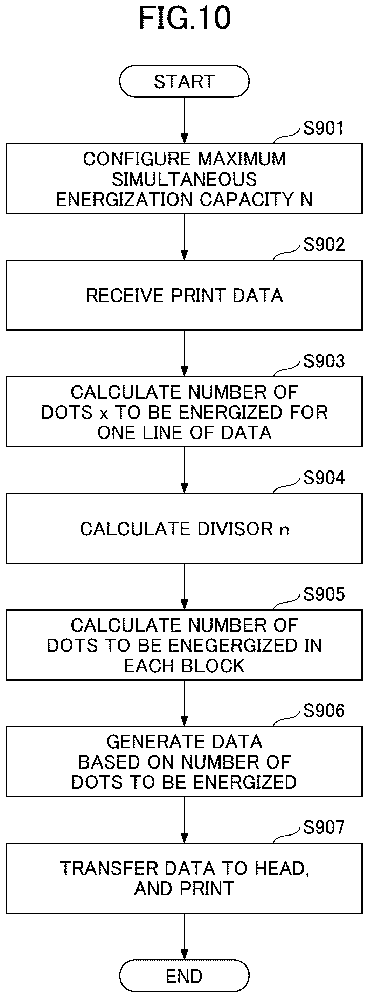

FIG. 10 is a flowchart showing a third example process flow according to the embodiment. First, the MCU 101 configures the maximum simultaneous energization capacity N (S901). For example, the MCU 101 may configure the maximum simultaneous energization capacity N to a setting value that is stored in advance in the memory 102 or the like, or may configure a setting value that the user inputs to the thermal printer 10. Next, the MCU 101 receives the print data transmitted from a peripheral device via the I/F circuit 105 (S902). Next, the MCU 101 calculates the number of dots x to be energized for one line of data based on the print data received in S902 (S903). Then, based on the maximum simultaneous energization capacity N configured in S901 and the number of dots x to be energized for one line of data calculated in S903, the MCU 101 may calculate the divisor n for the dots using the following mathematical formula 5 (S904). Note that n is an integer rounded up to the nearest whole number.

$$n = x/N \quad ... \quad (Mathematical\ formula\ 5)$$

Next, the MCU 101 may calculate the number of dots to be energized (the number of dots to be energized at the same time) in each block, among multiple blocks, by using a predetermined mathematical formula, based on the number of dots x to be energized for one line of data, calculated in S903, and the divisor n for the dots configured in S904 (S905). For example, the MCU 101 may calculate the number of dots to be energized in the first to the (n - 1)-th block from the mathematical formula 2, and calculate the number of dots to be energized in the n-th block from the mathematical formula 3. Note that x/n is a division that is rounded up to the nearest whole number. In another example, the MCU 101 may calculate the number of dots to be energized in the first to the n-th block from the mathematical formula 4. Here, "//" indicates a division that is rounded down to the nearest whole number. Next, the MCU 101 generates print control data for energizing a number of dots in each block, which matches the number of dots calculated for each block in S905, among multiple blocks (S906). Given that the thermal head 121 includes multiple dots, this print control data at least makes it possible to distinguish between dots that are energized (and that therefore produce heat) and dots that are not energized (and that therefore do not produce heat). Next, the MCU 101 transfers the print control data generated in S906 to the thermal head 121 via the head drive circuit 103, thereby simultaneously energizing a number of dots in each block, among multiple blocks, as calculated in S905. Furthermore, the MCU 101 transfers each of the multiple blocks to the thermal head 121 in time division, thereby printing one line of data on a printing medium, such as thermal paper (S907). Subsequently, the MCU 101 ends the series of steps shown in FIG. 10. Note that the steps S903 to S907 are performed by the MCU 101 for every one line. The MCU 101 repeats the steps S903 to S907 according to the number of lines to be printed, thereby printing multiple lines on the printing medium. In the thermal printer 10 according to the third example, the MCU 101 thus performs the series of steps shown in FIG. 10. By this means, when thermal head 121 prints one line of data block by block in the same or substantially the same manner as in the first example, a number of dots to match the number of dots to be energized calculated per block in S905 are energized simultaneously in each block among multiple blocks, so that the number of bits to be energized can be averaged out among multiple blocks. Therefore, the thermal printer 10 according to one embodiment can prevent or substantially prevent color density from varying from block to block within one line of data printed on a printing medium, such as thermal paper. Also, the thermal printer 10 according to the third example calculates the divisor n for the dots per line, so that the printing speed can be improved when the number of dots to be energized per line is small.

All examples and conditional language provided herein are intended for the purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more details of the present invention have been described in detail, it should be understood that the various changes, substitutions, and alterations could be made hereto without departing from the spirit and scope of the invention.

For example, the MCU 101 may calculate the number of dots to be energized in each block among multiple blocks by using mathematical formulas other than the mathematical formulas 2 to 4 described herein, such that the number of dots to be energized is averaged out among the multiple blocks.

**Claims**

1. A thermal printer for printing by using a thermal head including a plurality of dots, the thermal printer comprising:

   a controller configured to divide one line of print data into a plurality of data portions, and transfer the plurality of data portions to the thermal head in time division, thereby allowing the thermal head to print the one line of print data,
   wherein the controller is further configured to determine a number of dots to be energized in each of the plurality of data portions based on a predetermined mathematical formula in which x is a number of dots to be energized for the one line of print data and n is a number by which the one line of print data is divided into the data portions, such that the number of dots to be energized is averaged out among the plurality of data portions, thereby generating data inclusive of the determined number as print control data responsive to the print data.

2. The thermal printer according to claim 1, wherein the controller is further configured to calculate the number of dots to be energized in each of (n - 1) data portions among the n data portions, by using a following mathematical formula:

$$x/n$$

   where "/" indicates a division operation whose result is rounded up to a nearest whole number.

3. The thermal printer according to claim 1, wherein the controller is further configured to calculate the number of dots to be energized in the n data portions, by using a following mathematical formula:

$$(x + 0)//n, \ (x + 1)//n, \ ..., \ (x + (n - 1))//n$$

where "//" indicates a division operation whose result is rounded down to a nearest whole number.

4. The thermal printer according to claim 1, wherein the controller is further configured to calculate the number n based on a number of dots in the thermal head and a maximum number of dots to be simultaneously energized as set with respect to the thermal head.

5. The thermal printer according to claim 1, wherein the controller is further configured to calculate the number n based on the number of dots to be energized for the one line of print data and a maximum number of dots to be simultaneously energized as set with respect to the thermal head.

6. A thermal printer for performing printing by using a thermal head including a plurality of dots, the thermal printer comprising:

a controller configured to divide one line of print data into a plurality of data portions, and transfer the plurality of data portions to the thermal head in time division, thereby allowing the thermal head to print the one line of print data; and
a memory storing a data table in which a number of dots to be energized in each of the plurality of data portions is set forth for every number of dots that may be energized for the one line of print data,
wherein the controller is further configured to extract the number of dots to be energized in each of the plurality of data portions, from the data table stored in the memory, based on a number of dots to be energized for the one line of print data, thereby generating data inclusive of the extracted number as print control data responsive to the print data.

7. A method for controlling a thermal printer for performing printing by using a thermal head including a plurality of dots, the method comprising:

dividing one line of print data into a plurality of data portions;
determining a number of dots to be energized in each of the plurality of data portions based on a predetermined mathematical formula in which x is a number of dots to be energized for the one line of print data and n is a number by which the one line of print data is divided into the data portions, such that the number of dots to be energized is averaged out among the plurality of data portions, thereby generating data inclusive of the determined number as print control data responsive to the print data; and
transferring the plurality of data portions to the thermal head in time division, thereby allowing the thermal head to print the one line of print data based on the print control data.

8. A method for controlling a thermal printer, the thermal printer dividing one line of print data into a plurality of data portions and printing the one line of print data by using a thermal head including a plurality of dots, and the thermal printer having a memory that stores a data table in which a number of dots to be energized in each of the plurality of data portions is set forth for every number of dots that may be energized for the one line of print data, the method comprising:

extracting the number of dots to be energized in each of the plurality of data portions, from the data table stored in the memory, based on a number of dots to be energized for the one line of print data, thereby generating data inclusive of the extracted number as print control data responsive to the print data; and
transferring the plurality of data portions to the thermal head in time division, thereby allowing the thermal head to print the one line of print data based on the print control data.

# FIG.1

POWER SUPPLY — 140

10

**CONTROL CIRCUIT UNIT** — 100

I/F CIRCUIT — 105

MEMORY — 102

MCU — 101

HEAD DRIVE CIRCUIT — 103

MOTOR DRIVE CIRCUIT — 104

**PRINTER MECHANICAL PART** — 120

THERMAL HEAD — 121

PULSE MOTOR — 122

THERMISTOR — 123

EP 4 520 537 A1

EP 4 520 537 A1

FIG.2

# FIG.3

START

S301
ARE ENERGIZATION SETTINGS CONFIGURED?

YES →

S303
CONFIGURE MAXIMUM SIMULTANEOUS ENERGIZATION CAPACITY N

S304
CALCULATE DIVISOR n

NO ↓

S302
CONFIGURE DIVISOR n

S305
RECEIVE PRINT DATA

S306
CALCULATE NUMBER OF DOTS x TO BE ENERGIZED FOR ONE LINE OF DATA

S307
CALCULATE NUMBER OF DOTS TO BE ENERGIZED IN EACH BLOCK

S308
GENERATE PRINT CONTROL DATA BASED ON NUMBER OF DOTS TO BE ENERGIZED

S309
TRANSFER PRINT CONTROL DATA TO HEAD, AND PRINT

END

# FIG.4

EP 4 520 537 A1

| PRINT DATA | 1 | 1 | 1 | 1 | 1 | 1 | 1 | 1 | 1 | 1 | 1 | 1 | 1 | 0 | 0 | 0 | 1 | 1 | 1 | 1 | 1 | 1 | 1 |

| FIRST ENERGIZATION | 1 | 1 | 1 | 1 | 1 | 1 | 1 | 0 | 0 | 0 | 0 | 0 | 0 | 0 | 0 | 0 | 0 | 0 | 0 | 0 | 0 | 0 | 0 |

| SECOND ENERGIZATION | 0 | 0 | 0 | 0 | 0 | 0 | 0 | 1 | 1 | 1 | 1 | 1 | 1 | 0 | 0 | 0 | 1 | 0 | 0 | 0 | 0 | 0 | 0 |

| THIRD ENERGIZATION | 0 | 0 | 0 | 0 | 0 | 0 | 0 | 0 | 0 | 0 | 0 | 0 | 0 | 0 | 0 | 0 | 1 | 1 | 1 | 1 | 1 | 1 | 1 |

NUMBER OF DOTS TO BE ENERGIZED: 7

| PRINTING RESULT |

# FIG.5

PRINT DATA | 1 | 1 | 0 | 1 | 1 | 0 | 1 | 0 | 1 | 0 | 1 | 1 | 0 | 0 | 0 | 0 | 1 | 1 | 1 | 0 | 1 | 0 | 1 | 1 |

FIRST ENERGIZATION | 1 | 1 | 0 | 1 | 1 | 0 | 0 | 0 | 0 | 0 | 0 | 0 | 0 | 0 | 0 | 0 | 0 | 0 | 0 | 0 | 0 | 0 | 0 | 0 | — NUMBER OF DOTS TO BE ENERGIZED: 4

SECOND ENERGIZATION | 0 | 0 | 0 | 0 | 0 | 0 | 1 | 0 | 1 | 0 | 1 | 1 | 0 | 0 | 0 | 0 | 0 | 0 | 0 | 0 | 0 | 0 | 0 | 0 | — NUMBER OF DOTS TO BE ENERGIZED: 4

THIRD ENERGIZATION | 0 | 0 | 0 | 0 | 0 | 0 | 0 | 0 | 0 | 0 | 0 | 0 | 0 | 0 | 0 | 0 | 1 | 1 | 1 | 0 | 1 | 0 | 0 | 0 | — NUMBER OF DOTS TO BE ENERGIZED: 4

FOURTH ENERGIZATION | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 1 | — NUMBER OF DOTS TO BE ENERGIZED: 2

PRINTING RESULT

EP 4 520 537 A1

# FIG.6

EP 4 520 537 A1

# FIG.7

EP 4 520 537 A1

# FIG.8

START

S801
ARE ENERGIZATION SETTINGS CONFIGURED?

YES → S803
CONFIGURE MAXIMUM SIMULTANEOUS ENERGIZATION CAPACITY N

NO → S802
CONFIGURE DIVISOR n

S804
CALCULATE DIVISOR n

S805
RECEIVE PRINT DATA

S806
CALCULATE NUMBER OF DOTS x TO BE ENERGIZED FOR ONE LINE OF DATA

S807
CALCULATE NUMBER OF DOTS TO BE ENERGIZED IN EACH BLOCK FROM TABLE

S808
GENERATE PRINT CONTROL DATA BASED ON NUMBER OF DOTS TO BE ENERGIZED

S809
TRANSFER PRINT CONTROL DATA TO HEAD, AND PRINT

END

# FIG.9

150

| NUMBER OF DOTS TO BE ENERGIZED x | NUMBER OF DOTS TO BE ENERGIZED PER BLOCK | | | |
|---|---|---|---|---|
| | FIRST BLOCK | SECOND BLOCK | THIRD BLOCK | FOURTH BLOCK |
| 576 | 144 | 144 | 144 | 144 |
| 575 | 144 | 144 | 144 | 143 |
| 574 | 144 | 144 | 144 | 142 |
| 573 | 144 | 144 | 144 | 141 |
| 572 | 143 | 143 | 143 | 143 |
| 571 | 143 | 143 | 143 | 142 |
| 570 | 143 | 143 | 143 | 141 |
| 569 | 143 | 143 | 143 | 140 |
| 568 | 142 | 142 | 142 | 142 |
| 567 | 142 | 142 | 142 | 141 |
| 566 | 142 | 142 | 142 | 140 |
| 565 | 142 | 142 | 142 | 139 |
| 564 | 141 | 141 | 141 | 141 |
| 563 | 141 | 141 | 141 | 140 |
| 562 | 141 | 141 | 141 | 139 |
| 561 | 141 | 141 | 141 | 138 |
| 560 | 140 | 140 | 140 | 140 |
| 559 | 140 | 140 | 140 | 139 |
| 558 | 140 | 140 | 140 | 138 |
| 557 | 140 | 140 | 140 | 137 |
| ⋮ | ⋮ | ⋮ | ⋮ | ⋮ |
| 36 | 9 | 9 | 9 | 9 |
| 35 | 9 | 9 | 9 | 8 |
| 34 | 9 | 9 | 9 | 7 |
| 33 | 9 | 9 | 9 | 6 |
| 32 | 8 | 8 | 8 | 8 |
| 31 | 8 | 8 | 8 | 7 |
| 30 | 8 | 8 | 8 | 6 |
| 29 | 8 | 8 | 8 | 5 |
| 28 | 7 | 7 | 7 | 7 |
| 27 | 7 | 7 | 7 | 6 |
| 26 | 7 | 7 | 7 | 5 |
| 25 | 7 | 7 | 7 | 4 |
| 24 | 6 | 6 | 6 | 6 |
| 23 | 6 | 6 | 6 | 5 |
| 22 | 6 | 6 | 6 | 4 |
| 21 | 6 | 6 | 6 | 3 |
| 20 | 5 | 5 | 5 | 5 |
| 19 | 5 | 5 | 5 | 4 |
| 18 | 5 | 5 | 5 | 3 |
| 17 | 5 | 5 | 5 | 2 |
| 16 | 4 | 4 | 4 | 4 |
| 15 | 4 | 4 | 4 | 3 |
| 14 | 4 | 4 | 4 | 2 |
| 13 | 4 | 4 | 4 | 1 |
| 12 | 3 | 3 | 3 | 3 |
| 11 | 3 | 3 | 3 | 2 |
| 10 | 3 | 3 | 3 | 1 |
| 9 | 3 | 3 | 3 | 0 |
| 8 | 2 | 2 | 2 | 2 |
| 7 | 2 | 2 | 2 | 1 |
| 6 | 2 | 2 | 2 | 0 |
| 5 | 2 | 2 | 1 | 0 |
| 4 | 1 | 1 | 1 | 1 |
| 3 | 1 | 1 | 1 | 0 |
| 2 | 1 | 1 | 0 | 0 |
| 1 | 1 | 0 | 0 | 0 |
| 0 | 0 | 0 | 0 | 0 |

# FIG.10

```
┌─────────────┐
│    START    │
└─────────────┘
       │
       ▼                    S901
┌──────────────────────────┐
│   CONFIGURE MAXIMUM       │
│   SIMULTANEOUS            │
│   ENERGIZATION CAPACITY N │
└──────────────────────────┘
       │
       ▼                    S902
┌──────────────────────────┐
│   RECEIVE PRINT DATA      │
└──────────────────────────┘
       │
       ▼                    S903
┌──────────────────────────┐
│   CALCULATE NUMBER OF     │
│   DOTS x TO BE ENERGIZED  │
│   FOR ONE LINE OF DATA    │
└──────────────────────────┘
       │
       ▼                    S904
┌──────────────────────────┐
│   CALCULATE DIVISOR n     │
└──────────────────────────┘
       │
       ▼                    S905
┌──────────────────────────┐
│   CALCULATE NUMBER OF     │
│   DOTS TO BE ENEGERGIZED  │
│   IN EACH BLOCK           │
└──────────────────────────┘
       │
       ▼                    S906
┌──────────────────────────┐
│   GENERATE DATA           │
│   BASED ON NUMBER OF      │
│   DOTS TO BE ENERGIZED    │
└──────────────────────────┘
       │
       ▼                    S907
┌──────────────────────────┐
│   TRANSFER DATA TO HEAD,  │
│   AND PRINT               │
└──────────────────────────┘
       │
       ▼
┌─────────────┐
│     END     │
└─────────────┘
```

Europäisches
Patentamt

European
Patent Office

Office européen
des brevets

# EUROPEAN SEARCH REPORT

**Application Number**

EP 24 19 9307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H05 42700 A (AOI DENSHI KK) 23 February 1993 (1993-02-23) * paragraphs [0002] - [0004]; figures 1,2 * | 1-8 | INV. B41J2/355 |
| | ----- | | |
| A | US 2006/109338 A1 (CHUNG JIN-TAE [KR]) 25 May 2006 (2006-05-25) * the whole document * | 1-8 | |
| | ----- | | |

**TECHNICAL FIELDS SEARCHED (IPC)**

B41J

The present search report has been drawn up for all claims

| Place of search | Date of completion of the search | Examiner |
|---|---|---|
| The Hague | 8 January 2025 | Öztürk, Serkan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 9307

This annex lists the patent family members relating to the patent documents cited in  the above-mentioned European search report.
The members are as contained in the European Patent Office EDP file on
The European Patent Office is in no way liable for these particulars which are merely given for the purpose of information.

08-01-2025

| Patent document cited in search report | | Publication date | Patent family member(s) | | Publication date |
|---|---|---|---|---|---|
| JP H0542700 | A | 23-02-1993 | NONE | | |
| US 2006109338 | A1 | 25-05-2006 | CN | 1775544 A | 24-05-2006 |
| | | | EP | 1658983 A1 | 24-05-2006 |
| | | | KR | 20060056197 A | 24-05-2006 |
| | | | US | 2006109338 A1 | 25-05-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008030253 A